# EUROPEAN PATENT APPLICATION

(11) **EP 1 691 121 A1**
(43) Date of publication of application: **16.08.2006**
(21) Application number: 05380024.9
(22) Date of filing: 10.02.2005
(51) Int. Cl.: F16K 31/524

(54) **Hot water or steam faucet for a coffee machine**

(71) Applicant: Quality Espresso, SA, 08040 Barcelona (ES)
(72) Inventor: Viguer Munoz, Rafael, 08040 Barcelona (ES)
(74) Representative: Torner Lasalle, Elisabet

(57) **Abstract**

It comprises a body (1) with a passageway for the hot water or steam and a valve plug (5) pushed by a spring (7) against a seat (4). A stem (6) is connected by one end to the valve plug (5) and by the opposite end to a handle (8). A fixed cam (9) is joined to the body (1) and a moving cam (10) is joined to the stem (6) or to the handle (8). The said fixed and moving cams (9, 10) have respective surfaces (11, 12) combined to each other and inclined. The force of the string (7) makes that the said surfaces (11, 12) slide to a closed stable position of the valve plug (5), and a hand rotation of the handle (8) towards any of the two directions from the said closed position makes that the said surfaces (11, 12) slide towards the open positions of the valve plug (5) which gradually moves as the handle (8) rotates.

## Description

### Field of the technique

This invention refers to a hot water or steam faucet for a coffee machine, applicable, in general to machines for quickly preparing coffee, known as "expresso coffee machines" and more particularly to industrial or professional expresso coffee machines. However, the said faucet can be perfectly applied to other dispensing devices and even directly to a tank.

### Prior art

In the prior art machines for quickly preparing coffee, or expresso coffee machines are known, incorporating a hot water or steam faucet coupled to a pipe coming from a water-heating boiler located within the machine. Generally, the outlet of the said hot water or steam faucet is connected to a small moving duct ending in an outlet nozzle and it is used to steam or hot water bubbling in a liquid to heat it.

This kind of faucets is very usual which comprise a body with a passageway for the steam and a valve plug arranged to be seated on a valve seat located at a section of the said passageway. A rotating handle or knob adapted to be hand driven is connected to a stem associated to a body of the faucet by means of a mechanism which includes a threaded coupling by virtue of which turning the knob in one direction or the other carries a forwards or backwards travel of the stem within the body of the faucet. Elastic means are arranged to press on the plug against the seat at a closed position and the travel of the stem is used to take the plug apart from its seat overcoming the force of the said elastic means, towards an open position to allow the passage of the steam.

The drawback of this kind of faucets is that opening and closing operations are relatively slow and do not allow, for example, to quickly supply a limited amount of hot water or steam and with a virtually instant stop of the flow, that is to say, the faucet closure. In addition, closing the faucet has to be carried out in a voluntary manner, because any of the angular positions of the knob is stable and the faucet remains at the position at which it is left. With other words, if the knob is left in an open position, the faucet will remain open supplying steam until it is newly voluntarily turned to the closed position. Therefore, handling this kind of faucets requires significantly long seizing and turning operations thus its operation carries a longer workforce time and a lesser service manoeuvrability.

The utility model ES-A-1012074 discloses a gas faucet comprising a conventional type valve plug including a ball pushed by a spring towards a closed position and a mechanism composed of an axially moveable stem and arranged to push the ball through the valve seat overcoming the force of the said spring. The said stem is driven by a lever-shaped drive hinged on the body, which is related with a protruding end of the stem by means of a cam. The lever has a rest stable position at which the valve is closed. The cam profile is such that, turning the lever in a first direction, for example, pushing it towards the machine, the valve is gradually opening without providing a stable position to the lever, so that, if the lever is released, the force of the spring send the lever back and the valve quickly comes back to its closed position. By turning the lever in the opposite direction, that is to say, pulling it, the opening of the valve is quickly completed and the lever reaches a second stable position in which the valve remains open. Using only the turn of the lever to the first direction, the user can intermittently supply limited amounts of steam with a quick, almost instant response, in the manoeuvres of the valve opening and closing. Using the turn of the lever to a second direction, the user can achieve a continuous supply of steam until the lever is voluntarily taken to the initial position or closed position.

Although this lever driven faucet is fully effective in practice, it has the drawback that, when no instruction is given, a user cannot know to which direction he has to turn the lever to open the valve nor the different performances the faucet can provide depending on the direction to which the lever is turned.

An object of this invention is to provide an alternative construction for a hot water or steam faucet applicable to a coffee machine as above having a mechanism driven by a knob or handle which provides same performances regardless the direction to which the knob or handle is turned.

### Explanation of the invention

This invention contributes to achieve above and other objects by providing a hot water or steam faucet for a coffee machine of the type which comprises a body defining a passageway for the hot water or steam between an inlet and an outlet, an annular valve seat arranged around a section of the said passageway and a valve plug mounted moveable with respect to the said body and adapted to be displaced between a closed position, at which the valve plug is applied against the said valve seat to shut the said passageway and an open direction in which the valve plug is taken apart from the valve seat allowing the hot water or steam passing through the passageway. The faucet includes elastic means arranged to push the valve plug towards a closed position and a handle arranged to drive a mechanism adapted to move the valve plug towards its open position overcoming the force of the said elastic means. The hot water and steam faucet of this invention is characterised in that the said mechanism comprises a stem connected by one end to the said valve plug and by the other end, protruding from the body, to the said handle, a fixed cam joined to the body and a moving cam joined to the said stem or to the handle. The said fixed and moveable cams have respective coupling surfaces, mutually combined, which are inclined with respect to the longitudinal axis of the stem so that the force of the said elastic means provide a mutual slide to the said coupling surfaces to a first stable angular position of the handle with relation to the body. The said first stable angular position of the handle corresponds to a closed position of the valve plug. A manual turn of the handle towards at least one of the two directions from the said first stable angular position provides a mutual slide of the said coupling surface to at least a second angular position in which the valve plug is at its open position. The valve plug gradually moves between its closed and open positions as the handle is turning between the said first and second angular positions.

According to a preferred example of embodiment, the respective coupling surfaces of the fixed cam and the moving cam have symmetric combined slopes, arranged so that hand by turning of the handle towards one or the other of the two directions from the first stable angular position makes that the said coupling surfaces mutually slide towards two of the said second angular positions in which the valve plug is at its open position. In addition, the faucet comprises an arrangement of stops by means of which hand turning the handle is limited to a quarter of turn towards each of the two directions from the first stable angular position, providing second limit angular positions, which are also stable without having to be hand held.

The stability of the second limit angular positions is determined by the design of the fixed and moving cams. Alternatively, the fixed and moving cams can have a design ad hoc in order the two second limit angular positions are unstable in which case they can be held by hand against stops of the said arrangement of stops by the user. With it, by simply releasing the handle, the plug is immediately and virtually instant returned to the closed position by the force of the elastic means.

By incorporating a knob or a handle to drive the faucet valve a user intuitively feels that the knob must be turned to one or another direction from a stable rest position, that is to say, the closed position, to open the faucet valve. The slope of the coupling surfaces are adapted in order that the valve starts to be open almost immediately when starting the rotation and reaches a maximum opening with only a fourth of a turn. Due to the hand sensitivity, the user clearly feels that if he keeps the turning force on the handle overcoming the force of the rotation in the opposite direction exercised by the elastic means, the faucet will remain open with a passageway opening proportional to the angle rotated between the starting stable position and the limit position of a quarter turn. The user also rapidly feels that it is easy to rotate the knob or handle, in any direction, until he finds one of the stops of a quarter turn, where the arrangement of the stops will keep the valve at the optimum position of maximum opening and that, once he considers the services has ended, it will be enough to only slightly rotate the handle to have the elastic means quickly bringing the valve back to the closed position in a virtually instant manner. The lack of a first stable angular position of the handle corresponding to an open position of the valve prevents that the hot water or steam valve remains open for an unwanted reason.

With this construction the hot water or vapour faucet of this invention provides an intuitive, quick and safe way of operation very suitable for an industrial or professional expresso coffee machine designed to be handled by a user or a barman who in given periods of the day works in conditions of a great activity and carrying out several tasks at the same time, among which heating a liquid with steam using the hot water and steam faucet of the expresso coffee machine. In addition, the hot water or steam faucet of this invention is ambidextrous, that is to say, it can be easily driven as well by right-handed and left-handed persons and it can be mounted in any position, on the right or on the left of the coffee machine.

### Short description of the drawings

Above and other advantages and characteristics will be more apparent from the detailed description below of an example of embodiment with reference to the drawings attached, in which:
Fig. 1 is a cross sectional view of a hot water or steam faucet for coffee machine according to an example of embodiment of this invention, taken along a longitudinal axis thereof;
Fig. 2 is a view in perspective of a fixed cam forming part of a mechanism of the faucet of Fig. 1;
Fig. 3A is a side elevation view of the fixed cam of Fig. 2;
Fig. 3B is a cross sectional view taken by plane III-III of Fig. 3A;
Fig. 3C and 3D are top and bottom views, respectively, of the fixed cam of Fig. 2;
Fig. 4 is a view in perspective of a moving cam, which also forms a part of the mechanism of the faucet of Fig. 1;
Fig. 5A is a side elevation view of the moving cam of Fig. 4;
Fig. 5B is a cross sectional view taken by plane V-V of Fig. 5A;
Fig. 5C and 5D are top and bottom views, respectively, of a moving cam of Fig. 4; and
Fig. 6A and 6B are partly sectional side views showing the coupling of the moving cam to the fixed cam in two angular positions corresponding to the closed and open positions of the valve, respectively.

### Detailed description of an example of embodiment

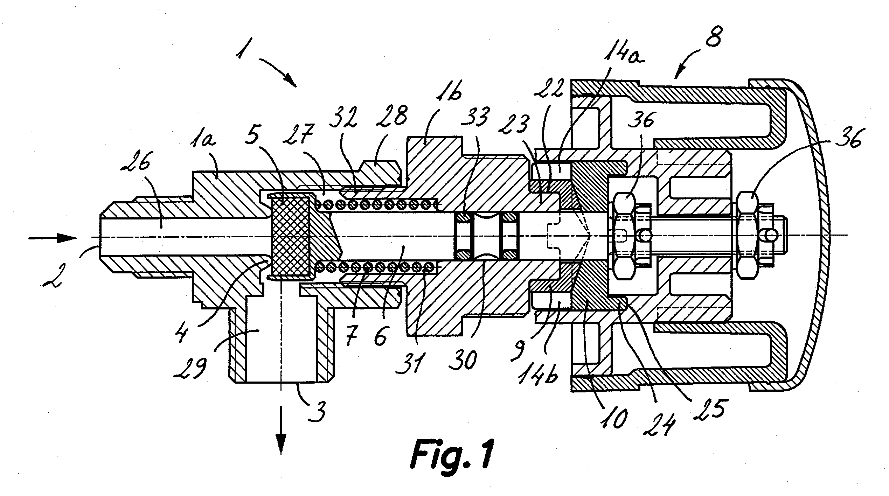

Referring first to Fig. 1, the hot water or steam faucet for the coffee machine comprises, according to an example of embodiment of this invention, a body 1, through which a passageway 26, 29 is defined for the passage of the hot water or steam between an inlet 2 and an outlet 3, as it is mentioned by means of arrows. Around a section of the said passageway 26, 29 an annular seat of a valve 4 and a valve plug 5 are arranged, the later being linked to a stem 6, is movingly mounted with respect to the said body 1 designed to be moved between a closing position (Fig. 1) in which the valve plug 5 is applied against the said valve seat 4 in order to shut the passageway 26, 29, and an open position (not shown) in which the valve plug 5 is taken apart from the valve seat 4 allowing the passage of the hot water and steam through the passageway 26,29.

In the example of embodiment shown, the body 1 is composed by a first part 1 a and a second part 1b. The said first part 1 a includes a first part of the said passageway, that is to say, an inlet passageway 26 communicating the said inlet 2 with the valve seat 4, at the other side of which there is a housing 27 for the said valve plug 5. The said housing 27 is aligned with the said inlet passageway 26 and shows a mouthpiece defining a coupling portion 28 adapted to be coupled with the said second part 1 b. Through the first part 1 a a second portion of the passageway for the hot water or steam is also extending, that is to say, an outlet passageway 29, crosswise the inlet passageway 26 which communicates the housing 27 with the said outlet 3.

The said second part 1b comprises a through guiding hole 30, aligned with the inlet passageway 26, for installing and guiding the said stem 6 and a housing 31 coaxial with the said guiding hole 30 to house elastic means 7 which, in the example of embodiment shown, are constituted by an helical spring arranged compressed around the stem 6 between the second part 1b and the valve plug 5 to push the valve plug 5 towards its closed position. Around an end of the said guiding hole 30 closest to the housing 27, the second part 1b defines a coupling portion 32 adapted for being coupled with the said coupling portion 28 of the first part 1a. The mutual coupling of the first and the second parts 1 a, 1b, comprises for example a threaded junction hot water or steam-tight. The stem 6 includes annular grooves to house sealing rings 33, arranged for pressing and slide on an internal surface of the said guiding hole 30 in order to provide a tight seal which prevents that the hot water or steam is leaking through the interface between the stem 6 and the guiding hole 30.

Around an end of the guiding hole 30 opposite to the said coupling portion 32 a configuration 23 is formed on which is coupled, without possibility of rotation a fixed cam 9 which, with a moving cam 10 joined to the stem 6 forms part of a mechanism adapted to move the valve plug 5 towards its open position overcoming the force of the said elastic means 7. The said mechanism is arranged to be hand driven through a handle 8 joined to an end of the stem 6 which protrudes from the body 1, more concretely from the said configuration 23 of the second part 1b. In the example of embodiment shown, the said moving cam 10 is joined to the handle 8, as it is explained below and in turn the handle 8 is connected to the stem 6 by means of a pair of nuts 36 coupled to the stem 6 on both sides of a central area of the handle 8, so that it prevents an axial move of the handle 8 but not a rotation thereof with relation to the stem 6.

The said fixed cam 9, joined to the body 1, and the said moving cam 10, joined to the stem 6 have respective coupling surfaces 11 and 12, mutually combined and inclined with respect to the longitudinal axis of the stem 6. By virtue of the said slope, a relative rotation between the fixed cam 9 and the moving cam 10 produces a travel in the axial direction of the moving cam 10, which draws the stem 6 and this later in turn moves the valve 5 plug. The slope of the respective coupling surfaces 11 and 12 is designed so that the force of the said elastic means 7 provides that the said coupling surfaces 11 and 12 mutually slide until the handle 8 reaches a first stable angular position with relation to the body 1. At the said first stable angular position of the handle 8, the stem 6 is at its position farthest to the valve seat 4 and the valve plug 5 is at its closed position (Fig. 1). A hand rotation of the handle 8 towards any of the two directions from the said first stable angular position causes that the said coupling surfaces 11 and 12 mutually slide towards a second angular position producing a travel of the stem 6 in a direction departing from the valve seat 4 to situate the valve plug 5 at the said open position.

As it will be described with more details below, the coupling surfaces 11 of the fixed cam 9 and the coupling surfaces 12 of the moving cam 10 have symmetric slopes, mutually combined by virtue of which hand rotations of the handle 8 towards one or the other of the two directions from the first stable angular position makes that the coupling surfaces 11 and 12 mutually slide towards two of the said second angular positions at which the valve plug 5 is at its open position. Preferably, the fixed and moving cams 9 and 10 comprise an arrangement of stops adapted to limit the said hand rotations of the handle 8 at a quarter turn towards each of the two directions from the first stable angular position. With this, the arrangement of the stops provides two second limit angular positions which in the example of embodiment shown are also stable although they could alternatively be unstable and they could be hand kept against the said stops arrangement.

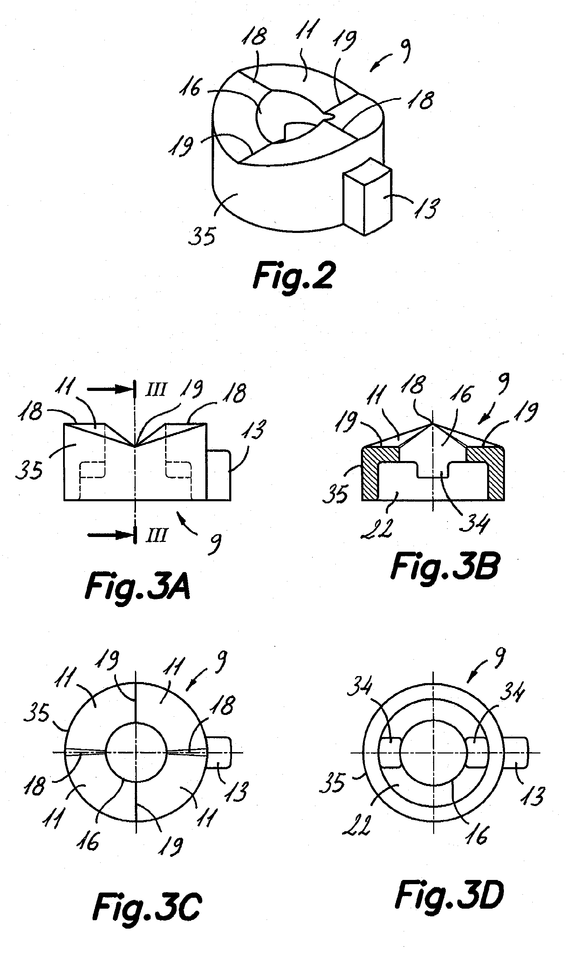

The fixed cam 9 is described below with reference to Fig. 2 and to Fig. 3A-3D. The fixed cam 9 comprises a body defining a cylindrical side surface 35 and a central hole 16 through which the stem 6 can slide. At one end of the fixed cam 9, a cavity 22 is formed adapted for being coupled by socketing it in the said configuration 23 formed at an axial end of the second part 1b of the body 1 (see Fig. 1). Within the cavity 22 protrusions 34 are formed designed to prevent, co-operating with the said configuration 23, that the fixed cam 9 rotates with relation to the second part 1 b of the body 1. The fixed cam 9 has corresponding coupling surfaces 11 formed at its axial end opposed to the cavity 22 in an annular arrangement around the central hole 16. The coupling surface 11 comprises two diametrically opposite areas having a maximum height 18, two diametrically opposed areas having a minimum height 19, and offset a quarter turn with relation to the said two areas of maximum height 18 and four lengths of helical surface, each of which is extending from one of the said area having the maximum height 18 up to one of the said areas having a minimum height 19, contiguous. From the said cylindrical side surface 35 of the fixed can 9 a stop 13 radially protrudes which forms part of the said stops arrangement.

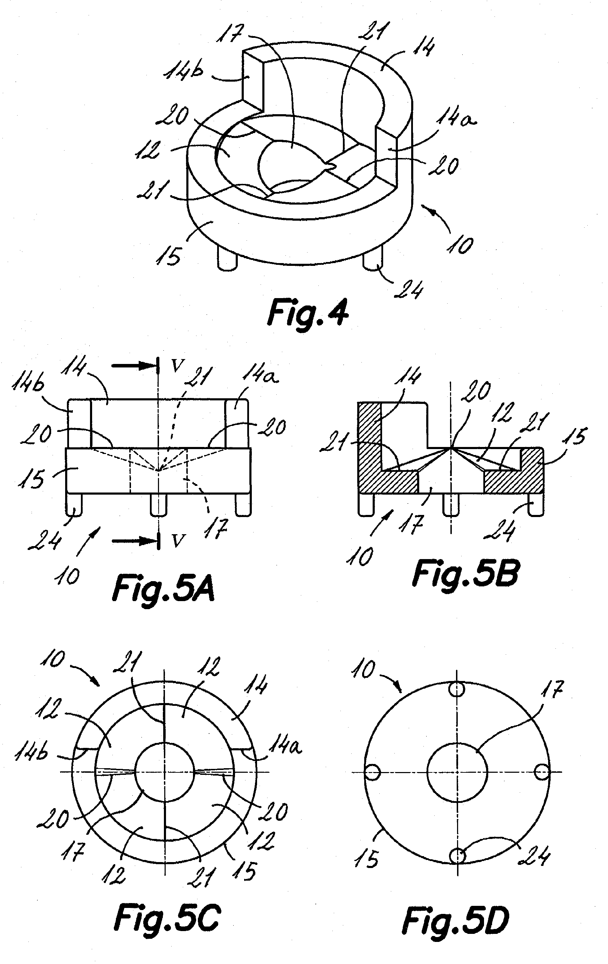

With relation to Fig. 4 and Fig. 5A to 5D, the moving cam 10 is now described which comprises a cylindrical wall 15 which has an extension 14 axially protruding from it. The extension 14 has ends 14a, 14b, which act as stops of the mentioned stop arrangements, as it is described below. The moving cam 10 includes a corresponding central hole 17 for the stem 6 passage and the coupling surfaces 12 of the moving cam 10 are in an annular arrangement between the said central hole 17 and the cylindrical wall 15. Here again, the coupling surfaces 12 comprise two diametrically opposed areas offset a quarter turn with relation to the said two maximum height areas 20, and four lengths of helical surface, each of which is extending from one of the said maximum height areas 20 up to one of the said minimum height areas 21, contiguous. The moving cam 10 has formed at its axial end opposite to the coupling surfaces 12, protrusions 24 configured and arranged for being coupled without the possibility of rotation in cavities 25 formed on a surface of the handle 8 (see Fig. 1).

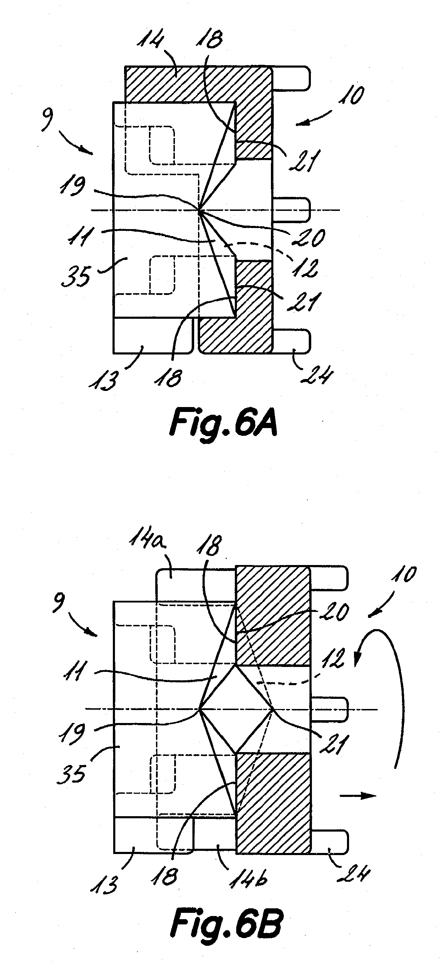

As it is shown in Fig. 6A and 6B, the dimensions and slopes of the coupling surfaces 11 and 12 of the fixed and moving cams 9, 10 are identical and mutually combined. One part of the cylindrical side surface 35 of the fixed cam 9 is fastened rotating within the extension 14 of the cylindrical wall 15 of the moving cam 10. When the moving cam 10 is rotated by driving the handle 8, the coupling surfaces11 and 12 of the fixed and moving cams 9, 10 slide one on the other and by virtue of their slopes, the stem 6 is moved and with it the valve seat 5. The said stop 13 of the fixed cam 9 interferes on both sides with the travels of the said ends 14a, 14b of the extension 14 of the moving cam 10 when this later rotates, determining with it the two above mentioned second limit angular positions.

In Fig. 6A, the moving cam 10 is coupled to the fixed cam 9 at a position corresponding to the first stable angular position of the handle 8 and to the closed position of the valve plug 5. It can be seen that the maximum and minimum height areas 20, 21 of the coupling surfaces 12 of the moving cam 10 are at positions coinciding respectively with the areas of minimum and maximum height 19, 18 of the coupling surfaces 11 of the fixed cam 9, that is to say, with their opposed. Therefore, the moving cam 10 is partly introduced in the fixed cam 9 and its respective helical lengths are in mutual contact.

In Fig. 6B, the fixed cam 9 is still at the same position as in Fig. 6A while the moving cam 10 is rotated a quarter turn (in the direction shown by a curved arrow) with relation to its position in Fig. 6A. Here the moving cam 10 is coupled to the fixed cam 9 in a position corresponding to one of the two second limit angular positions of the handle 8 and, therefore, to the open position of the valve plug 5. It can be seen that here the areas of maximum and minimum height 20, 21 of the coupling surfaces 12 of the moving cam 10 are at positions respectively coinciding with the corresponding areas of maximum and minimum height 18, 19 of the coupling surfaces 11 of the fixed cam 9, that means, with its counterparts. Therefore, only the respective maximum height areas 18 of the fixed cam 9 and the maximum height areas 20 of the moving cam 10 are in contact to each other while their respective helical lengths are separated. This produced a travel of the moving cam 10 (to the right of the drawing in the direction shown by a straight arrow), the moving cam 10 moved the stem 6 and this later in turn moved the valve plug 5 to its maximum opening position. In the position shown in Fig. 6B, a side of the stop 13 of the fixed cam 9 is in contact with an end 14b of the extension 14 of the moving cam 10 limiting its rotation and therefore the rotation of the handle 8 to a quarter turn with relation to the first stable closed angular position shown in Fig. 6A. A turn of the handle 8 in the opposite direction is shown in Fig. 6B would produce an identical result.

The position shown in Fig. 6B defined by the arrangement of stops 13, 14a, 14b is stable, that means, the position is kept even though the user releases the handle. However, given the small size of the maximum height areas 18 and 20 of the fixed and moving cams 9, 10, and at the round shape of at least one of them, when the user starts a slight hand force to move the handle 8 back to the first stable position, the force of the elastic means 7 quickly moves back the moving cam 10 to the position shown in Fig. 6A (and in Fig. 1) and with it the valve plug 5 to the closed position.

A person skilled in the art would be capable to introduce variations and modifications in the example of embodiment shown and described without being out of the scope of this invention as it is defined in the claims appended.

## Claims

1. Hot water or steam faucet for coffee machine of the type comprising a body (1) defining a passageway for the hot water or steam between an inlet (2) and an outlet (3), an annular valve seat (4) arranged around a section of the said passageway and a valve plug (5) mounted in a moving manner with respect to the said body (1) and adapted to be moved from a closed position at which the valve plug (5) is applied against the said valve seat (4) to shut the said passageway and to an open position at which the valve plug (5) is separated from the valve seat (4) allowing the passage of the hot water or steam through the passageway, elastic means (7) being incorporated arranged to push the valve plug (5) towards its closed position and a handle (8) arranged for driving a mechanism adapted to move the valve plug (5) towards its open position overcoming the force of the said elastic means (7) **characterised in that** the said mechanism comprises a stem (6) connected by one end to the said valve plug (5) and by the opposite end, protruding from the body (1) to the said handle (8), a fixed cam (9) joined to the body (1) and a moving cam (10) joined to the said stem (6) or to the handle (8) the said fixed and moving cams (9, 10) having respective coupling surfaces (11, 12) combined to each other and inclined with respect to the longitudinal axis of the stem (6) so that the force of the said elastic means (7) makes that the said coupling surfaces (11, 12) mutually slide to a first stable angular position of the handle (8) with relation to the body (1) in which the valve plug (5) is at its closed position and where a hand rotation of the handle (8) towards at least one of the two directions from the said stable angular position makes that the said coupling surfaces (11, 12) mutually slide to at least a second angular position at which the valve plug (5) is at its open position the valve plug (5) gradually moving between its closed and open position as the handle (8) rotates from the said first to the second angular positions.

2. Faucet, according to claim 1, **characterised in that** the said coupling surfaces (11) of the fixed cam (9) and the said coupling surfaces (12) of the moving cam (10) have symmetric combined slopes so that hand turns of the handle (8) towards one and the other of the two directions from the first stable angular position makes that the said coupling surfaces (11, 12) mutually slide towards two of the said second angular positions at which the valve plug (5) is at its open position.

3. Faucet, according to claim 2, **characterised in that** it comprises an arrangement of stops adapted to limit the said hand rotations of the handle (8) a quarter turn towards each of the two directions from the first stable angular position, providing second limit angular positions, also stable against the said stop arrangement.

4. Faucet, according to claim 3, **characterised in that** the said stops arrangement comprises a stop (13) radially protruding from one cylindrical lateral surface (35) of the fixed cam (9) and an extension (14) which axially protrudes from a cylindrical wall (15) of the moving cam (10) where the said extension (14) of the said cylindrical wall (15) of the moving cam (10) rotating partly surrounds the said cylindrical lateral surface (35) of the fixed cam (9) one and the other sides of the said stop (13) of the fixed cam (9) interfering with ends (14a, 14b) of the extension (14) of the fixed cam (10) to define the said second limit angular positions when the moving cam (10) rotates.

5. Faucet, according to claim 3, **characterised in that** the fixed cam (9) and the moving cam include respective central holes (16, 17) for the passage of the stem (6) and the respective coupling surfaces (11, 12) of the fixed and moving cams (9, 10) are arranged in an annular manner and comprise each, two diametrically opposed maximum height areas (18, 20), two minimum height areas (19, 21) diametrically opposed and offset a quarter turn with relation to the said two maximum height areas (18, 20) and four lengths of helical surface, each of which is extending from one of the said maximum height areas (18, 20) up to one of the said minimum height areas (19, 21), contiguous.

6. Faucet according to claim 5, **characterised in that** the fixed cam (9) has formed at its axial end opposite to the coupling surfaces (11) a cavity (22) shaped and arranged to be coupled without the possibility of rotation in a configuration (23) formed at an axial end of the body (1).

7. Faucet, according to claim 5, **characterised in that** the moving cam (10) has formed on its axial end opposite to the coupling surfaces (12) some protrusions (24) shaped and arranged to be coupled without the possibility of rotating in cavities 25 formed on a surface of the handle (8).

8. Faucet according to any of above claims, **characterised in that** the body (1) is formed by first and second parts (1a,1b) tightly coupled to each other not to let hot water or steam leaks.

9. Faucet, according to claim 8, **characterised in that** the said first part (1a) defines an inlet passageway (26) which communicates the said inlet (2) with the said valve seat (4), a housing (27) for the said valve plug (5) aligned with the said inlet passageway (26), a portion of coupling (28) at a mouthpiece of the said housing (27) for coupling to the said second part (1b) and an outlet passageway (29) crosswise the inlet passageway (26) and which communicates the said housing (27) with the said outlet (3).

10. Faucet, according to claim 9, **characterised in that** the said second part (1b) comprises a guiding hole (30) for the said stem (6) aligned with the inlet passageway (26), a housing (31) coaxial to the said guiding hole (30) for housing the said elastic means (7), a coupling portion (32) around an end of the said guiding hole (30) for coupling with the said coupling portion (28) of the first part (1 a) and a configuration (23) formed around the end opposite to the guiding hole (30) for coupling without possibility of rotation in a cavity (22) of the fixed cam (9).

11. Faucet, according to claim 10, **characterised in that** the stem (6) includes annular slots to house sealing rings (33) arranged for pressing and sliding on an internal surface of the said guiding hole (30).
